# EUROPEAN PATENT SPECIFICATION

(11) **EP 4 052 986 B1**
(45) Date of publication and mention of the grant of the patent: **24.04.2024**
(21) Application number: 22158829.6
(22) Date of filing: 25.02.2022
(51) Int. Cl.: B61D 15/00, B61F 13/00, B60B 17/00, B65G 1/04, B65G 41/02, B66F 11/04, A01G 9/14

(54) **TUBE RAIL CART**
ROHRSCHIENENWAGEN
CHARIOT POUR RAILS TUBULAIRES

(30) Priority: 03.03.2021 BE 202105155
(43) Date of publication of application: 07.09.2022
(73) Proprietor: B&A Automation BVBA, 2320 Hoogstraten (BE)
(72) Inventor: BOGAERTS, Joris, 2960 Brecht (BE)
(74) Representative: Van hunsel, Lieven M.S.

(56) References cited:
- CA-A1- 3 031 875
- NL-C2- 1 014 556

## Description

The present invention relates to a tube rail cart.

More specifically the invention relates to a tube rail cart which is intended to be able to move forward on a pair of tube rails of a tube rail system, for example of a greenhouse, and which to this end is provided with a pair of front wheels and a pair of rear wheels.

From document NL 1 104 556 a tube rail cart is known provided with a pair of front wheels and a pair of rear wheels.

Both the front wheels and the rear wheels of the described tube rail cart are provided with an axial wheel section with a small diameter and an axial wheel section with a big diameter.

Without limiting the invention to this, more specifically the invention relates to such tube rail carts which are also provided with a safety system which is capable of verifying whether the tube rail cart finds itself in a condition on a tube rail system or in a condition on another (flat) surface or is in a transitional condition between both aforementioned conditions and whereby such safety system, depending on the determined condition or transitional condition of the tube rail cart, is capable of preventing unsafe operations with the tube rail cart and thus guarantee a safe operation thereof.

Safety systems for such tube rail carts are already known, whereby said known safety systems are intended to avoid unsafe situations therewith, but generally said known safety systems do not take into account the fact whether the tube rail cart rests on a pair of tube rails, supports on another flat surface or is in a transitional condition.

For example, tube rail carts or tube rail aerial work platforms are often used in the horticulture sector for maintaining the greenhouses and harvesting fruit and vegetables.

Said tube rail carts or tube rail aerial work platforms travel back and forth over a tube rail system that is applied between two rows of plantings or planted beds.

In the middle or on the sides of a planting, perpendicular to the rows of plantings or beds, a paved strip is typically provided, for example a concrete strip, which among other things, is intended to move such tube rail cart or tube rail aerial work platform to a next or another pair of tube rails between the rows of plantings.

The safe use of such tube rail cart differs depending on whether such tube rail cart is located on the tube rails or on a flat concrete intermediate strip.

For example it is customary that such tube rail carts are provided with a scissor mechanism that serves to move the work platform up and down.

To be able to work safely, the scissor mechanism may only be activated for an upward movement of the work platform, when the tube rail cart stands on the tube rails or on a concrete strip or the like.

Preferably, said upward movement of the work platform is excluded when the tube rail cart is in a transitional condition, whereby the tube rail cart stands with a pair of wheels on tube rails and with another pair of wheels on a flat surface.

Indeed, in such transitional condition the risk that the tube rail cart would tilt is much too big, particularly when an operator is located on the work platform.

Preferably, a safety system is provided to ensure a safe operation of the tube rail cart which, depending on the condition which the tube rail cart is in, prevents or allows certain actions with the tube rail cart.

Another safety may consist in limiting the speed with which the tube rail cart is driven or allowing a higher drive speed depending on the condition of the tube rail cart.

For example, it is useful limiting the speed of the tube rail cart during a transition of the tube rail cart from the tube rail system to a paved surface and the like.

The purpose of the present invention is therefore to provide a solution to the aforementioned and/or other disadvantages.

More specifically, a purpose of the invention is to provide a tube rail cart that allows an extremely reliable way of working safely.

Another purpose of the invention consists in developing a tube rail cart with means that are capable of knowing the condition of the tube rail cart and more specifically are capable of verifying whether the tube rail cart is located on tube rails or not, fully rests on a flat surface or is in a transitional condition between both conditions.

Additionally, a purpose of the invention is to provide a tube rail cart which is provided with means that are capable of countering and preventing the execution of certain operations or actions with the tube rail cart, which in such condition can be dangerous or unsafe.

To this end the present invention relates to a tube rail cart which is intended to be able to move forward on a pair of tube rails of a tube rail system, for example of a greenhouse, whereby the tube rail cart is provided with a pair of front wheels and a pair of rear wheels, whereby both the front wheels and the rear wheels of the tube rail cart are provided with an axial wheel section with a small diameter and an axial wheel section with a big diameter, whereby the tube rail cart is provided with a device for determining a condition of the tube rail cart, which at least comprises the following elements:
- a measurement unit for measuring the rotational speed of one of the front wheels or a parameter related to said rotational speed;
- a measurement unit for measuring the rotational speed of one of the rear wheels or a parameter related to said rotational speed;
- a calculation unit for converting the measured rotational speeds to a determination parameter; and,
- a determination unit which based on the calculated determination parameter determines the relevant condition of the tube rail cart and which more specifically determines on which axial section of the front wheels and the rear wheels the tube rail cart supports when moving forward.

A big advantage of such tube rail cart according to the invention is that its wheels have two axial sections, on the one hand an axial section with small diameter, whereby the intention is that the tube rail cart can travel on a pair of tube rails with said axial section of the wheels, and on the other hand an axial section with a big diameter, whereby the intention is that the tube rail cart supports on said axial section of the wheels when the tube rail cart moves forward on a flat surface.

Another advantage of such tube rail cart according to the invention is that the difference in diameter of the axial sections of the wheels of the tube rail cart can be used to know the condition of the tube rail cart based on the ratio between the rotational speed of the front wheels and the rear wheels and/or based on the ratio between the rotational speed of the wheels and the speed of the tube rail cart.

An added advantage of a tube rail cart according to the invention is that it is provided with a device which is provided with the means to measure the rotational speeds of a front wheel and a rear wheel, to convert said rotational speeds to a determination parameter and based on said determination parameter to know the condition of the tube rail cart.

This knowledge of the condition of the tube rail cart can be used further by additional means of a safety system of the tube rail cart to ensure a safe operation of the tube rail cart.

In a preferred embodiment of a tube rail cart according to the invention, the front wheels are executed identically and the rear wheels are executed identically, whereby the small diameter and the big diameter of the relevant axial sections of a front wheel and the small diameter and the big diameter of the relevant axial sections of a rear wheel all differ from each other.

By providing the front wheels and rear wheels with axial sections with big and small diameters which are different depending on whether it relates to a front wheel or a rear wheel, it is possible to determine the condition of the tube rail cart based exclusively on the ratio between the rotational speed of a front wheel and the rotational speed of a rear wheel.

Indeed, said ratio will be different depending on whether the tube rail cart is moving forward on the sections with biggest diameter, when located on a flat surface, whether it is moving forward on the sections with the smallest diameter, when the tube rail cart is travelling on the tube rails, or whether it is moving forward with a pair of wheels supporting on the axial sections thereof with a big diameter and with the other pair of wheels supporting on the axial sections thereof with a small diameter, according to a condition whereby the tube rail cart partially stands on tube rails and partially on a flat surface.

In another preferred embodiment of a tube rail cart according to the invention, the determination unit therefore is configured to determine in which of the following conditions the tube rail cart is moving forward:
- a first condition, whereby the tube rail cart supports on the axial sections of the front wheels with a big diameter and on the axial sections of the rear wheels with a big diameter;
- a second condition, whereby the tube rail cart supports on the axial sections of the front wheels with a big diameter and on the axial sections of the rear wheels with a small diameter;
- a third condition, whereby the tube rail cart supports on the axial sections of the front wheels with a small diameter and on the axial sections of the rear wheels with a big diameter; or,
- a fourth condition, whereby the tube rail cart supports on the axial sections of the front wheels with a small diameter and on the axial sections of the rear wheels with a small diameter.

It is understood that such embodiment of a tube rail cart according to the invention is very interesting because the tube rail cart can be efficiently protected against unsafe use with this knowledge about the condition, more specifically one of the aforementioned four conditions, of the tube rail cart.

Preferably, a tube rail cart according to the invention is such that the calculation unit is configured to calculate a determination parameter which is the ratio between the rotational speed measured with the measurement units at the front wheels and the rotational speed measured at the rear wheels.

As already explained above, the condition which the tube rail cart is in can be determined immediately based on such determination parameter.

To this end, preferably, a tube rail cart according to the invention is equipped with a device to determine the condition of the tube rail cart, the determination unit of which is configured to verify with which of the following ratios between the diameters of the wheels the determination parameter corresponds:
- the ratio between the small diameter of the rear wheels and the small diameter of the front wheels, according to an aforementioned first condition;
- the ratio between the small diameter of the rear wheels and the big diameter of the front wheels, according to an aforementioned second condition; or,
- the ratio between the big diameter of the rear wheels and the small diameter of the front wheels, according to an aforementioned third condition;
- the ratio between the big diameter of the rear wheels and the big diameter of the front wheels, according to an aforementioned fourth condition.

A big advantage of such embodiment of a tube rail cart according to the invention is that determining the condition of the tube rail cart is very simple, can be executed with very simple means and barely requires any calculations.

In another preferred embodiment of a tube rail cart according to the invention, the device for determining a condition of the tube rail cart is also provided with a memory, whereby the determination unit of the device is configured to verify whether a change in the condition of the tube rail cart occurs and additionally verifies, if necessary, whether it relates to a first transitional condition from an aforementioned first condition to an aforementioned second condition or an aforementioned third condition, according to the transition of the tube rail cart from travelling on a flat surface to travelling on a pair of tube rails, or whether it relates to a transitional condition from an aforementioned fourth condition to an aforementioned second condition or an aforementioned third condition, according to the transition of the tube rail cart from travelling on a pair of tube rails to travelling on a flat surface.

With these additional characteristics a safe operation of the tube rail cart can be ensured even better.

In a preferred embodiment of a tube rail cart according to the invention, the device for determining a condition of the tube rail cart is part of a safety system, whereby the device is provided with a signal generator for generating an output signal depending on the condition identified by the determination unit and/or a transitional condition of the tube rail cart, whereby the safety system further at least comprises switching means that enable or disable control means for activating and/or deactivating actuators or regulating means of actuators of the tube rail cart based on the output signal sent to the switching means.

A big advantage of such tube rail cart according to the invention which is provided with a safety system is that the condition which the tube rail cart is in, can be detected, such that said condition can be taken into account to take safety measures.

Another big advantage of such tube rail cart according to the invention which is provided with a safety system is that the safety system disposes of switching means which enable or disable control means for activating and/or deactivating actuators of the relevant tube rail cart based on the detected condition which the tube rail cart is in.

By enabling or disabling the control means for activating and deactivating actuators of the tube rail cart, preventing that an operator executes an operation or action with the tube rail cart, which in the relevant condition could be unsafe, is very simple.

In a preferred embodiment of a tube rail cart according to the invention, the aforementioned output signal of the signal generator is further a digital output signal which is such that a level of the output signal indicates which condition the tube rail cart is in.

A big advantage of such embodiment of a safety system according to the invention is that the digital output signal gives a direct indication of the condition which the tube rail cart is in and it can therefore serve as input signal of the switching means for enabling or disabling certain control means of actuators of the tube rail cart, in order to prevent the activation and/or deactivation of said actuators by an operator or indeed to allow it.

Obviously all this is with the intention of ensuring a safe operation with the tube rail cart in the relevant condition.

With the intention of better showing the characteristics of the invention, some preferred embodiments of a tube rail cart according to the invention are described hereinafter by way of an example without any limiting nature, with reference to the accompanying drawings, wherein:
figure 1 shows a perspective view of a possible embodiment of a tube rail cart according to the invention which is put on a pair of tube rails;
figure 2 shows a perspective view of the tube rail cart standing on a flat surface next to the pair of tube rails;
figure 3 shows a side view according to the arrow F03 of the tube rail cart of figure 2;
figures 4 and 5 analogously to figures 2 and 3 show a condition of the tube rail cart whereby drive wheels thereof support on the flat surface and other wheels on tube rails;
figures 6 and 7, analogously to figures 2 and 3, show a condition of the tube rail cart whereby drive wheels thereof support on tube rails and other wheels on the adjoining, flat surface;
figures 8 and 9 analogously to figures 2 and 3 show a condition of the tube rail cart, as shown in figure 1 whereby the tube rail cart stands on a pair of tube rails;
figure 10 shows a bottom view according to the arrow F10 in figure 3 of the tube rail cart;
figures 11 and 12 on a larger scale show the wheels indicated in figure 10 respectively with F11 and F12;
figure 13 shows a perspective view and on an even bigger scale an exploded view of the wheel in figure 12, to illustrate a possible embodiment of a measurement unit for measuring the rotational speed of said wheel;
figure 14 shows a side view according to the arrow F14 in figure 13; and,
figures 15 and 16 schematically illustrate the operation of a device for determining a condition of the tube rail cart which is provided in the tube rail cart according to the invention.

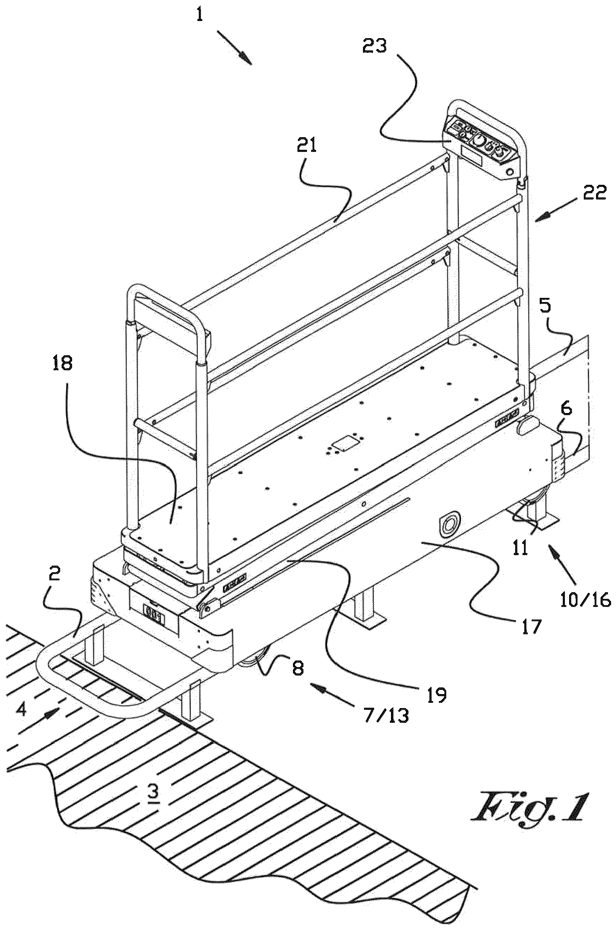

Figures 1 to 9 show a possible embodiment of a tube rail cart 1 according to the invention in different positions relative to a tube rail system 2 and relative to an adjoining, flat surface 3.

Typically, the flat surface 3 is a concrete strip 3 that traverses plantings in a greenhouse.

Several such concrete strips 3 can be provided across the surface area of the greenhouse.

The tube rail system 2 may, for example, consist of several routes 4 of two parallel tube rails 5 and 6 which, for example, are provided perpendicular to a concrete strip 3 between successive rows of plantings.

The tube rail cart 1 is provided with a pair 7 of front wheels 8 and 9 and a pair 10 of rear wheels 11 and 12, with which the tube rail cart 1 can move forward over the pair of tube rails 5 and 6 of the tube rail system 2.

The pair 7 of front wheels 8 and 9 is in this case a pair of driven wheels 13 which are provided on an axle 14 and are driven by driving means 15 in the form of an electric motor 15.

The pair 10 of rear wheels 11 and 12 is in this case a pair of non-driven idler wheels 16.

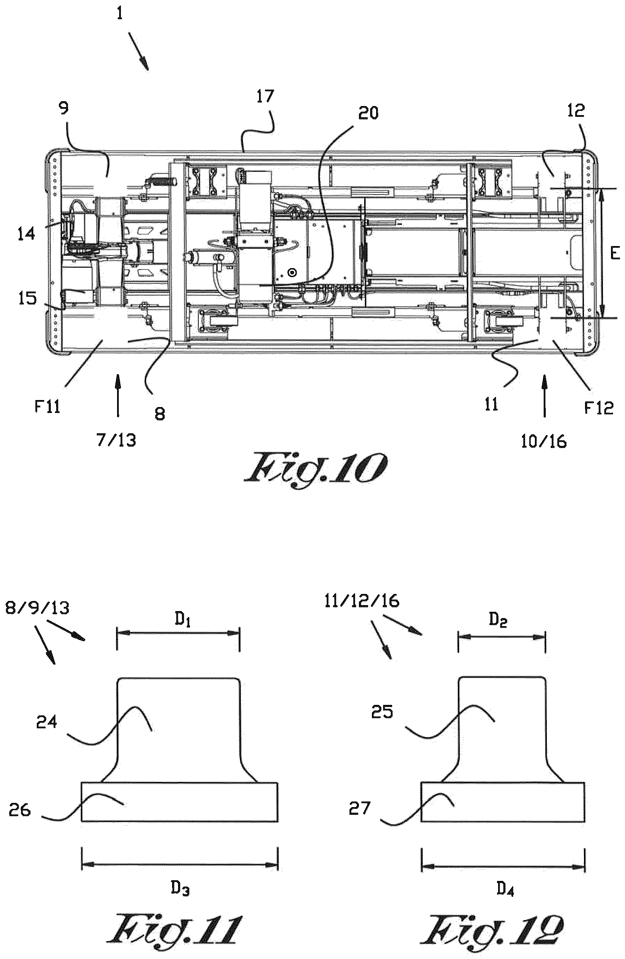

This is all illustrated in more detail in the bottom view of figure 10.

The front wheels 8 and 9 and the axle 14, as well as the rear wheels 11 and 12 are mounted under a chassis 17 of the tube rail cart 1 and they bear said chassis 17 and in essence the whole tube rail cart 1.

A work platform 18 is mounted on the chassis 17 which is movable up and down by means of a scissor mechanism 19 which is driven by driving means 20 in the form of an electric motor 20.

The work platform 18 is surrounded by a mesh 21 and on an end face 22 of the mesh 21, control means 23 are provided, with which the up and down movement of the scissor mechanism 19 can be controlled, among other things, and with which the tube rail cart 1 can be driven for a forward or backward movement.

To be able to guarantee a safe operation of the tube rail cart 1, it is necessary to know the condition of the tube rail cart 1.

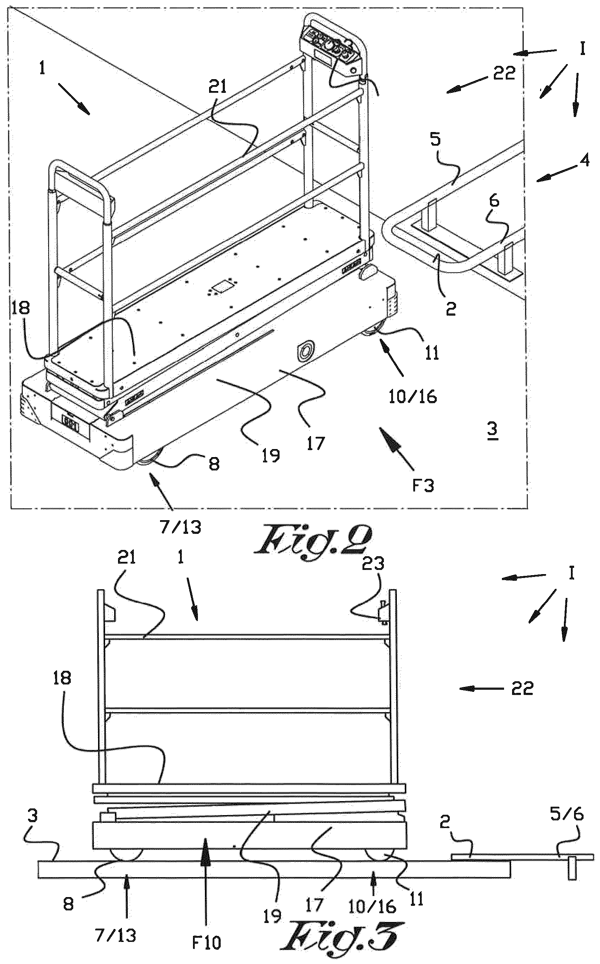

More specifically, according to the invention it is intended that the tube rail cart 1 is equipped with means which can at least distinguish the different conditions of the tube rail cart 1, which are shown in figures 2 to 9.

A first condition I is illustrated in figures 2 and 3, whereby the tube rail cart 1 stands on a concrete strip 3 or flat surface 3 with the front wheels 8 and 9, and with the rear wheels 11 and 12.

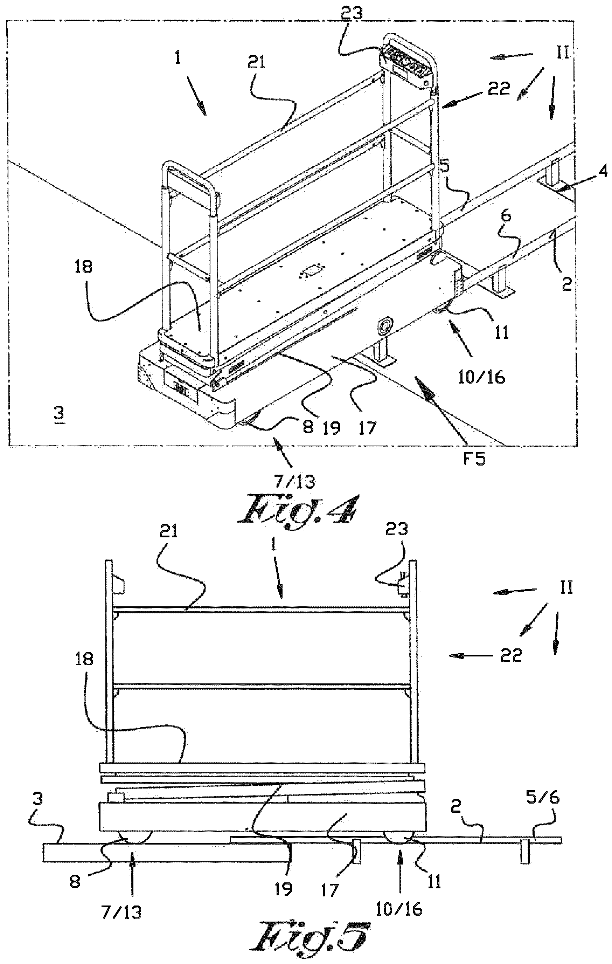

Figures 4 and 5 show a second condition II, whereby
the tube rail cart 1 supports on the flat surface 3 or the concrete strip 3 with the front wheels 8 and 9, which in this case are driven wheels 13, whereas it supports on the tube rails 5 and 6 with the rear wheels 11 and 12, which in this case are idler wheels 16.

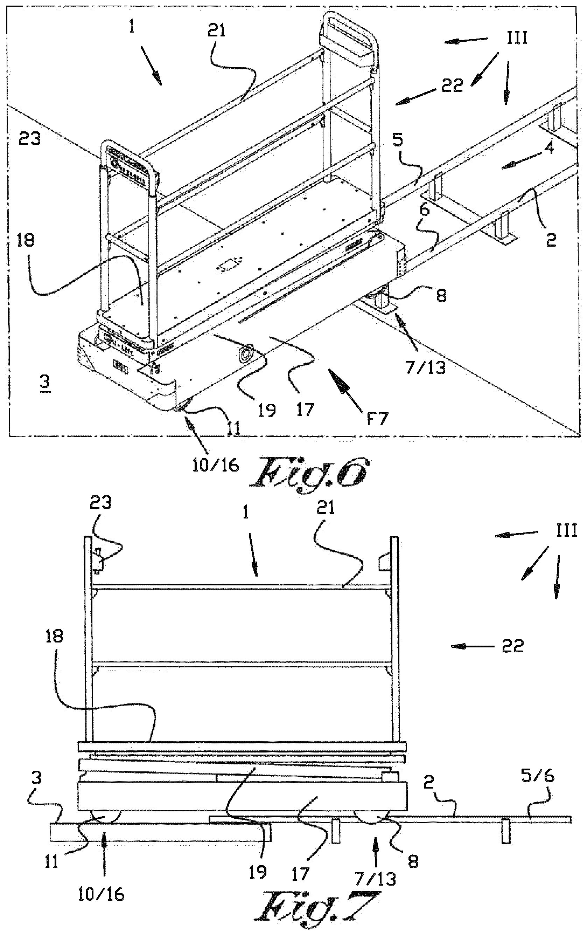

The figures 6 and 7 show a reverse, third condition III, whereby the tube rail cart 1 supports on the tube rails 5 and 6 with the front wheels 8 and 9, which in this case are the driven wheels 13, whereas it supports on the flat surface 3 or the concrete strip 3 with the rear wheels 11 and 12, which in this embodiment are idler wheels 16.

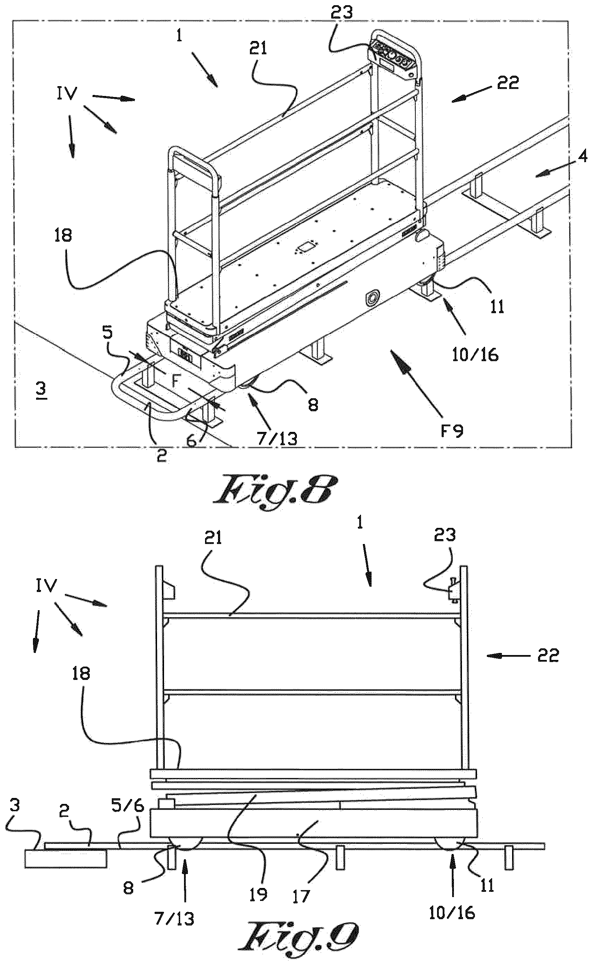

Figures 8 and 9 show yet a fourth condition IV, whereby this time the tube rail cart 1 supports on the tube rails with the front wheels 8 and 9 with the rear wheels 10 and 11 .

The conditions II and III correspond with a transitional condition TC whereby the tube rail cart 1 travels from the concrete strip 3 or the flat surface 3 to the tube rails 5 and 6 or whereby reversely the tube rail cart 1 comes off the tube rails 5 and 6 to the flat surface 3 or the concrete strip 3.

In principle it is also useful for a safe operation of the tube rail cart 1 to know whether such transitional condition TC relates to a first transitional condition TC-I , whereby the tube rail cart 1 moves from a condition I on the concrete strip 3 or the flat surface 3 to a condition II on the tube rails 5 and 6, or whether it relates to a second transitional condition TC-II, whereby the tube rail cart 1 moves from a condition II on the tube rails 5 and 6 to a condition I on the concrete strip 3 or the flat surface 3.

Preferably, the tube rail cart 1 is also provided with means with which the nature of the transitional condition TC, either a first transitional condition TC-I, or a second transitional condition TC-II, can be measured or determined.

To realise all this, both the front wheels 8 and 9 and the rear wheels 11 and 12 of a tube rail cart 1 according to the invention are each provided with two axial sections.

The front wheels 8 and 9 hereby have an axial section 24 with a small diameter D₁ and the rear wheels 11 and 12 have an axial section 25 with a small diameter D₂.

Further, the front wheels 8 and 9 have an axial section 26 with a big diameter D₃ and the rear wheels 11 and 12 an axial section 27 with a big diameter D₄.

Preferably, according to the invention the front wheels 8 and 9 are executed identically and the rear wheels 11 and 12 are also executed identically.

Preferably, according to the invention the small diameter D₁ and the big diameter D₃ of the relevant axial sections 24 and 26 of a front wheel 8 or 9 and the small diameter D₂ and the big diameter D₄ of the relevant axial sections 25 and 27 of a rear wheel 11 or 12 all differ from each other.

This is clearly shown for example in the figures 11 and 12.

The purpose is that the tube rail cart 1 can travel on a pair of tube rails 5 and 6 with the axial sections 24 and 25 with small diameters D₁ and D₂ of both the front wheels 8 and 9 and the rear wheels 11 and 12 and can travel on a flat surface 3 or concrete strip 3 with the axial sections 26 and 27 with big diameters D₃ and D₄ of both the front wheels 8 and 9 and the rear wheels 11 and 12.

To this end it is obviously ensured that the distance E between the axial sections 24 and 25 with small diameters D₁ and D₂ on either side of the tube rail cart 1 corresponds with the distance F between the tube rails 5 and 6.

The tube rail cart 1 according to the invention is further provided with a device 28 for determining a condition I to IV or a transitional condition TC-I or TC-II of the tube rail cart 1.

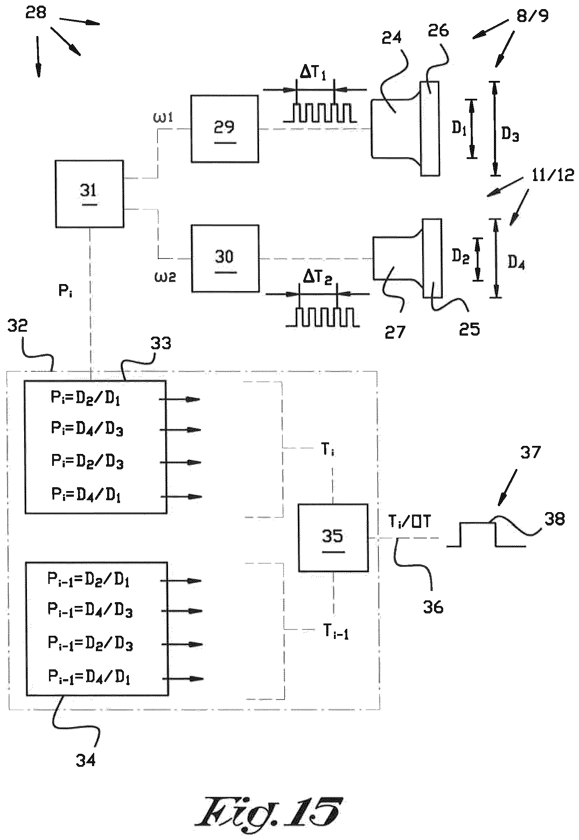

A diagram of this is shown in figure 15.

The device 28 comprises a measurement unit 29 for measuring the rotational speed ω₁ of one of the front wheels 8 or 9, as well as a measurement unit 30 for measuring the rotational speed ω₂ of one of the rear wheels 11 or 12.

Measuring the rotational speeds ω₁ and ω₂ is not to be construed literally and can also relate to a parameter such as a frequency or period or any other parameter related with the aforementioned rotational speeds ω₁ and ω₂.

The device 28 further comprises a calculation unit 31 for converting the measured rotational speeds ω₁ and ω₂ to a determination parameter P.

The device 28 also comprises a determination unit 32 which is configured to determine the relevant condition I - IV or TC-I or TC-II of the tube rail cart 1 based on the calculated determination parameter P and which more specifically determines on which axial sections 24 to 27 of the front wheels 8 and 9 and the rear wheels 11 and 12, the tube rail cart 1 supports when moving forward.

In a preferred embodiment of a tube rail cart 1 according to the invention, the calculation unit 31 calculates a determination parameter P which is the ratio between the measured rotational speed ω₁ the front wheels 8 and 9 (or at a parameter related to said rotational speed ω₁) and the measured rotational speed ω₂ at the rear wheels 11 and 12 (or a parameter related to said rotational speed ω₂). In short: P = ω₁ / ω₂.

Preferably, the determination unit 32 of the device 28 hereby verifies, for example in an electronic calculation section 33 suitable to this end, with which of the following ratios between the diameters D₁ to D₄ of the wheels 8, 9, 11 and 12, the determination parameter P corresponds:
- the ratio between the big diameter D₄ of the rear wheels 11 and 12 and the big diameter D₃ of the front wheels 8 and 9, whereby thus P = D₄/D₃, according to an aforementioned first condition I, whereby the tube rail cart 1 moves forward with all wheels 8, 9, 11 and 12 on the flat surface 3 or on the concrete strip 3;
- the ratio between the small diameter D₂ of the rear wheels 11 and 12 and the big diameter D₃ of the front wheels 8 and 9, whereby thus P = D₂/D₃, according to an aforementioned second condition II, whereby the tube rail cart 1 travels with the front wheels 8 and 9 on the flat surface 3 and moves forward with the rear wheels 11 and 12 on the tube rails 5 and 6;
- the ratio between the big diameter D₄ of the rear wheels 11 and 12 and the small diameter D₁ of the front wheels 8 and 9, whereby thus P = D₄/D₁, according to an aforementioned third condition III, whereby the tube rail cart 1 travels with the front wheels 8 and 9 on the tube rails 5 and 6 and moves forward with the rear wheels 11 and 12 on the flat surface 3; or,
- the ratio between the small diameter D₂ of the rear wheels 11 and 12 and the small diameter D₁ of the front wheels 8 and 9, whereby thus P = D₂/D₁, according to an aforementioned fourth condition IV whereby the tube rail cart 1 moves forward with all wheels 8, 9, 11 and 12 on the tube rails 5 and 6.

The speed of the tube rail cart 1 during a straight line movement is the same for the whole tube rail cart 1 and if the wheels 8, 9, 11 and 12 are assumed to roll without sliding during the movement of the tube rail cart 1, the ratio between the rotational speeds ω₁ and ω₂ of the front wheels 8 and 9 and the rear wheels 11 and 12 and the diameters D₁ to D₄ of the relevant axial wheel section 24 to 27 on which the tube rail cart 1 supports when moving forward, follows automatically.

To know the sequence of the condition of the tube rail cart 1, preferably the device 28 must regularly ..., i-2, i-1, i, i+1, i+2, ..., for example with an interval ΔT every time, determine the conditions ..., Cᵢ₋₂, Cᵢ₋₁, Cᵢ, Cᵢ₊₁, Cᵢ₊₂,... of the tube rail cart 1 by executing the aforementioned steps with the measurement units 29 and 30, the calculation unit 31 and the determination unit 32.

Most preferably, the device 28 or the determination unit 32 is also provided with a memory 34, in which a previous condition Cᵢ₋₁ is recorded which is determined at a moment i-1 or in which several such previous conditions are recorded.

The intention hereby is that the determination unit 32 of the device 28 performs an additional operation by verifying whether a change in the condition of the tube rail cart 1 occurs, whereby the measured condition Cᵢ at moment i is compared to condition Cᵢ₋₁ at moment i-1 stored in the memory 34 and it is verified whether these conditions Cᵢ and Cᵢ₋₁ differ and whereby it is additionally verified, if necessary, what the transitional condition TC is that occurs, more specifically whether it relates to a first transitional condition TC-I from a first condition I to a second condition II or third condition III, according to the transition of the tube rail cart 1 from travelling on a flat surface 3 to travelling on a pair of tube rails 5 and 6, or whether it relates to a second transitional condition TC-II from a fourth condition IV to a second condition II or third condition III, according to the transition of the tube rail cart 1 from travelling on a pair of tube rails 5 and 6 to travelling on a flat surface 3.

Said operations can for example occur in a separate unit 35 suitable to this end of the determination unit 32, which receives input from the memory 34 and the calculation section 33 of the determination unit 32.

The unit 35 can, for example, be provided with a signal generator 36 for generating an output signal 37 depending on the condition Cᵢ and/or transitional condition TC-I or TC-II of the tube rail cart 1 identified by the determination unit 32.

The output signal 37 generated by the signal generator 36 can hereby be a digital output signal 37, whereby a level 38 of the output signal 37 indicates which condition Cᵢ or TC-I or TC-II the tube rail cart 1 is in.

Obviously many other possibilities and ways to indicate the condition of the tube rail cart 1 according to the invention are not excluded.

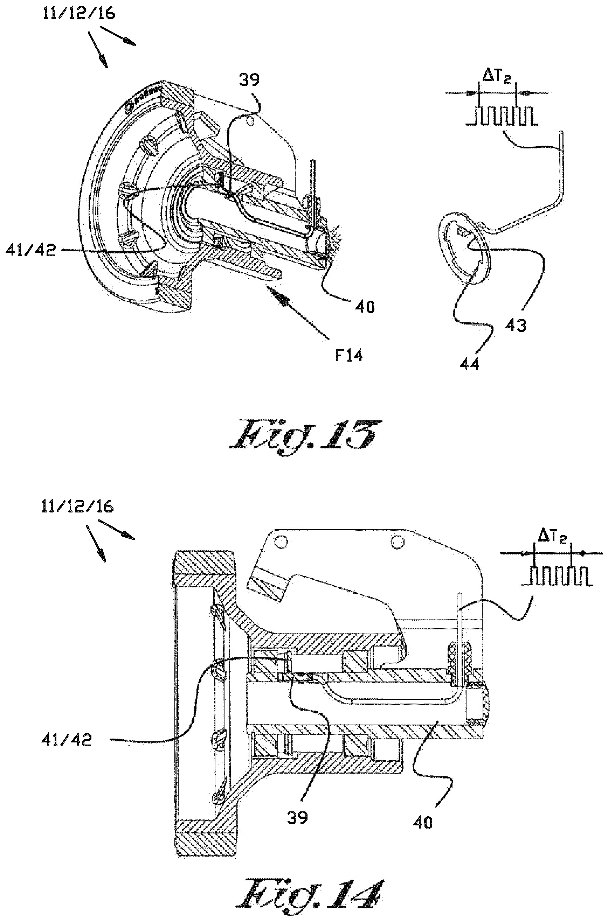

Figures 13 and 14 also show how a measurement unit 29 or 30 for measuring the rotational speed ω₁ or ω₂ can be executed in practice.

In the embodiment shown, the measurement unit 30 of the device 28 for measuring the rotational speed of a rear wheel 11 or 12 or idler wheel comprises an inductive sensor 39 which is incorporated in the axle 40 around which the relevant wheel 11 or 12 turns.

In the relevant wheel 11 or 12 a metal element 41 is further provided which generates one or more pulses per rotation in the inductive sensor 39.

In the embodiment shown in the figures 13 and 14 this is realised by executing the metal element 41 as a ring 42 with recesses 43 or radial protrusions 44 which are provided at a regular distance from each other along the contour of the ring 42.

In this case, three such recesses 43 or protrusions 44 are provided along the contour, such that in the inductive sensor 39 of the measurement unit 29 or 30, three pulses per rotationΔT₂ are generated.

As already explained in the introduction, preferably the device 28 for determining a condition Cᵢ or TC-I or TC-II of the tube rail cart 1 is part of a safety system 45 in a tube rail cart 1 according to the invention.

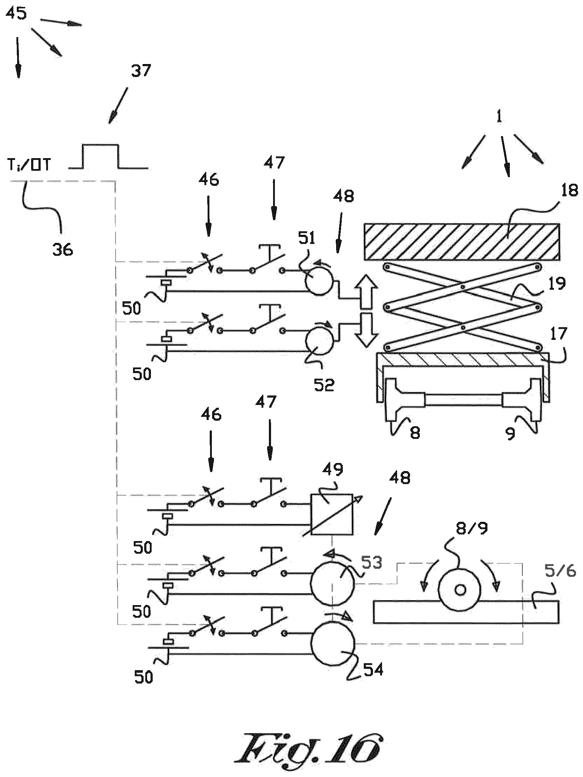

By way of example such safety system 45 is schematically shown in figure 16.

It is understood that the diagram shown in figure 16 is only intended to visually represent the different components of a safety system 45 of a tube rail cart 1 according to the invention and that a realistic diagram will look far more complicated in reality.

Preferably, the safety system 45 is hereby also provided with switching means 46 that enable or disable control means 47 for activating and/or deactivating actuators 48 or regulating means 49 of actuators 48 of the tube rail cart 1, based on the output signal 37 coming from the unit 35 of the determination unit 32 sent to the switching means 46.

The aforementioned actuators 48 can be very diverse and can for example be formed by the most diverse electric motors, jacks, hydraulic cylinders, pneumatic drives or compressed air cylinders and the like, but in the diagram of figure 16 it was chosen to represent the actuators 48 as direct-current motors 48 that are powered by an electrical power supply 50.

In the same way the control means 47 for activating and deactivating the actuators 48 may also assume various forms.

Said control means 47 may, for example, consist of control buttons, push-buttons, switches, electronic equipment, computers and the like for operating, enabling or disabling the aforementioned actuators 48, but in figure 16 they are invariably represented by means of a push button 47.

The upper section of figure 16 illustrates that the switching means 46 can be used for enabling or disabling control means 47 of driving means 51 for the upward movement and driving means 52 for the downward movement of a scissor mechanism 19 of the tube rail cart 1.

By correctly switching the switching means 46 based on the detected condition, it can be ensured for example that an operator cannot move the scissor mechanism 19 upward if the tube rail cart 1 is not completely on the tube rail system 2 or on the flat surface 3 or on the concrete strip 3.

For the sake of simplicity in figure 16 the driving means 51 for the upward movement and the driving means 52 for the downward movement of the scissor mechanism 19 are drawn as separate driving means.

In practice it typically concerns one and the same motor (or another sort of actuator, such as a hydraulic cylinder) with which both the upward movement and the downward movement can be realised and whereby the downward movement does not necessarily require an active energy source, but for example is realised by letting oil run from a chamber of a hydraulic cylinder into another chamber and the like.

Enabling or disabling the control means 47 with the switching means 46 is schematically shown by switches 46 with which the connection with the electrical power supply 50 can be made or can be interrupted, but in practice totally different ways can of course be applied for enabling or disabling the control means 47.

The lower section of figure 16 further schematically illustrates that the switching means 46 can also be used for enabling or disabling control means 47 of driving means 53 for the forward drive and driving means 54 for the reverse drive of the wheels 8 and/or 9 and/or for enabling or disabling control means 47 of regulating means 49 for regulating the speed with which the driving means 53 and 54 drive the wheels 8 and/or 9.

The switching means 46 can hereby for example be switched such that the wheels 8 and/or 9 cannot be driven or can only be driven at a limited speed, when the tube rail cart 1 does not completely rest on the tube rail system 2.

Again, in practice, the driving means 53 and 54 can be formed by one single electric motor 15, as is the case for example in the embodiment of figure 10.

In a preferred embodiment of a tube rail cart 1 according to the invention the switching means 46 or configured to enable or disable the control means 47 for activating and deactivating actuators 48 based on a condition of the tube rail cart 1 identified by the device 28 and according to one or more of the following criteria:
- upon identifying a first condition I or fourth condition IV, whereby the tube rail cart 1 rests completely on a flat surface 3 or completely on the tube rails 5 and 6, enabling or disabling the control means 47 of driving means 51 for the upward movement of a scissor mechanism 19 respectively;
- both upon identifying a first condition I and a fourth condition IV, whereby the tube rail cart 1 rests completely on a flat surface 3 or completely on the tube rails 5 and 6, enabling the control means 47 of driving means 52 for the downward movement of a scissor mechanism 19; and/or
- upon identifying a fourth condition IV, whereby the tube rail cart 1 rests completely on the tube rails 5 and 6, or upon identifying another condition of the tube rail cart 1, enabling or disabling the control means 47 of regulating means 49 to limit the speed of the driving means 53 and/or 54 of the wheels 8 and 9 respectively.

Generally speaking it is advantageous when the safety system 45 of a tube rail cart 1 according to the invention ensures one or more of the following safeties:
- not allowing the scissor mechanism 19 to move upward as long as all wheels 8, 9, 11 and 12 are not in contact with a tube rail 5 or 6 or with the flat surface (3) such as for example the concrete strip (3); and/or,
- not allowing the wheels 8 and 9 to drive the tube rail cart 1 forward or backward as long as all wheels 8, 9, 11 and 12 are not in contact with a tube rail 5 or 6, or allowing this at a limited speed only.

The present invention is by no means limited to the embodiments of the tube rail cart 1 according to the invention described by way of example and illustrated with reference to the figures, but such tube rail cart 1 can be realised in other ways without departing from the scope of the invention defined by the appended claims.

## Claims

1. Tube rail cart (1) which is intended to be able to move forward on a pair of tube rails (5, 6) of a tube rail system (2), for example of a greenhouse, whereby the tube rail cart (1) is provided with a pair (7) of front wheels (8, 9) and a pair (10) of rear wheels (11, 12), wherein both the front wheels (8, 9) and the rear wheels (11, 12) of the tube rail cart (1) are provided with an axial wheel section (24, 25) with a small diameter (D₁, D₂) and an axial wheel section (26, 27) with a big diameter (D₃, D₄), **characterized in that** the tube rail cart (1) is provided with a device (28) for determining a condition (I-IV, TC-I, TC-II) of the tube rail cart (1), which at least comprises the following elements:
- a measurement unit (29) for measuring the rotational speed (ω₁) of one of the front wheels (8, 9) or a parameter related to said rotational speed (ω₁);
- a measurement unit (30) for measuring the rotational speed (ω₂) of one of the rear wheels (11, 12) or a parameter related to said rotational speed (ω₂);
- a calculation unit (31) for converting the measured rotational speeds (ω₁, ω₂) to a determination parameter (P); and,
- a determination unit (32) which is configured to determine the relevant condition (I - IV or TC-I or TC-II) of the tube rail cart (1) based on the calculated determination parameter (P) and which more specifically is configured to determine on which axial section (24 to 27) of the front wheels (8, 9) and the rear wheels (11, 12), the tube rail cart (1) supports when moving forward.

2. Tube rail cart (1) according to claim 1, **characterised in that** the front wheels (8, 9) are executed identically and the rear wheels (11, 12) are executed identically, whereby the small diameter (D₁) and the big diameter (D₃) of the relevant axial sections (24, 26) of a front wheel (8, 9) and the small diameter (D₂) and the big diameter (D₄) of the relevant axial sections (25, 27) of a rear wheel (11, 12) all differ from each other.

3. Tube rail cart (1) according to claim 1 or 2, **characterised in that** the determination unit (32) is configured to determine in which of the following conditions the tube rail cart is moving forward:
- a first condition (I), whereby the tube rail cart (1) supports on the axial sections of the front wheels (8, 9) with a big diameter and on the axial sections of the rear wheels (11, 12) with a big diameter;
- a second condition (I), whereby the tube rail cart (1) supports on the axial sections of the front wheels (8, 9) with a big diameter and on the axial sections of the rear wheels (11, 12) with a small diameter;
- a third condition (III), whereby the tube rail cart (1) supports on the axial sections of the front wheels (8, 9) with a small diameter and on the axial sections of the rear wheels (11, 12) with a big diameter; or,
- a fourth condition (IV), whereby the tube rail cart (1) supports on the axial sections of the front wheels (8, 9) with a small diameter and on the axial sections of the rear wheels (11, 12) with a small diameter.

4. Tube rail cart (1) according to one or more of the previous claims, **characterised in that** the calculation unit (31) is configured to calculate a determination parameter (P) which is the ratio between the measured rotational speed (ω₁) at the front wheels (8, 9) and the measured rotational speed (ω₂) at the rear wheels (11, 12) (P = ω₁ / ω₂).

5. Tube rail cart (1) according to claims 2 to 4, **characterised in that** the determination unit (32) of the device is configured to verify with which of the following ratios between the diameters of the wheels (8, 9, 11, 12) the determination parameter (P) corresponds:
- the ratio between the big diameter (D₄) of the rear wheels (11, 12) and the big diameter (D₃) of the front wheels (8, 9), whereby thus P = D₄/D₃, according to an aforementioned first condition (I), whereby the tube rail cart (1) moves forward with all wheels (8, 9, 11 and 12) on the flat surface (3) or on the concrete strip (3) ;
- the ratio between the small diameter (D₂) of the rear wheels (11, 12) and the big diameter (D₃) of the front wheels (8, 9), whereby thus P = D₂/D₃, according to an aforementioned second condition (II), whereby the tube rail cart (1) travels with the front wheels (8, 9) on the flat surface (3) and moves forward with the rear wheels (11, 12) on the tube rails (5, 6);
- the ratio between the big diameter (D₄) of the rear wheels (11, 12) and the small diameter (D₁) of the front wheels (8, 9), whereby thus P = D₄/D₁, according to an aforementioned third condition (III), whereby the tube rail cart (1) travels with the front wheels (8, 9) on the tube rails (5, 6) and moves forward with the rear wheels (11, 12) on the flat surface (3); or,
- the ratio between the small diameter (D₂) of the rear wheels (11, 12) and the small diameter (D₁) of the front wheels (8, 9), whereby thus P = D₂/D₁, according to an aforementioned fourth condition (IV) whereby the tube rail cart (1) moves forward with all wheels (8, 9, 11 and 12) on the tube rails (5, 6).

6. Tube rail cart (1) according to one or more of the previous claims, **characterised in that** the tube rail cart (1) is intended to travel with the axial sections (24, 25) with a small diameter (D₁, D₂) of both the front wheels (8, 9) and the rear wheels (11, 12) on a pair of tube rails (5, 6) and with the axial sections (26, 27) with a big diameter (D₃, D₄) of both the front wheels (8, 9) and the rear wheels (11, 12) on a flat surface (3).

7. Tube rail cart (1) according to claims 3 and 6, **characterised in that** the device (28) is also provided with a memory (34), whereby the determination unit (32) of the device (28) is configured to verify whether a change in the condition (C) of the tube rail cart (1) occurs and if necessary additionally verifies whether it relates to a first transitional condition (TC-I) from a first condition (I) to a second condition (II) or third condition (III), according to the transition of the tube rail cart (1) from travelling on a flat surface (3) to travelling on a pair of tube rails (5, 6), or whether it relates to a transitional condition (TC-II) from a fourth condition (IV) to a second condition (II) or third condition (III), according to the transition of the tube rail cart (1) from travelling on a pair of tube rails (5, 6) to travelling on a flat surface (3).

8. Tube rail cart (1) according to one or more of the previous claims, **characterised in that** a first pair (7) of wheels (8, 9) of the pair (7) of front wheels (8, 9) and the pair (10) of rear wheels (11, 12) is a driven pair of wheels (13) and whereby a second pair (10) of wheels (11, 12) of the pair (7) of front wheels (8, 9) and the pair (10) of rear wheels (11, 12) is a non-driven pair of idler wheels (16).

9. Tube rail cart (1) according to any one of the previous claims, **characterised in that** at least one measurement unit (29, 30) of the device (28) comprises an inductive sensor (39) which is incorporated in the axle (40) around which the wheel (11, 12) turns, the rotational speed (ω₂) of which needs to be measured, whereby an element (41, 42) is provided in the relevant wheel (11, 12) which generates one or more pulses (37) per rotation in the inductive sensor (39).

10. Tube rail cart (1) according to any one of the previous claims, **characterised in that** the device (28) for determining a condition (Cᵢ, TC-I, TC-II) of the tube rail cart (1) is part of a safety system (45) whereby the device (28) is provided with a signal generator (36) for generating an output signal (37) depending on the condition (Cᵢ) and/or transitional condition (TC-I, TC-II) of the tube rail cart (1) identified by the determination unit (32), whereby the safety system (45) further comprises at least switching means (46) which enable or disable control means (47) for activating and/or deactivating actuators (48) or regulating means (49) of actuators (48) of the tube rail cart (1) based on the output signal (37) sent to the switching means (46) .

11. Tube rail cart (1) according to claim 10, **characterised in that** the output signal (37) of the signal generator (36) is a digital output signal (37), whereby a level (38) of the output signal (37) indicates which condition (Cᵢ, TC-I, TC-II) the tube rail cart (1) is in.

12. Tube rail cart (1) according to claim 10 or 11, **characterised in that** the switching means (46) are able to enable or disable one or more of the following control means (47) for activating and deactivating actuators (48):
- control means (47) of driving means (53, 54) for driving a driven pair of wheels (8, 9) forwards or backwards;
- control means (47) of regulating means (49) for regulating the speed of the driving means (53, 54) of the wheels (8, 9); and/or,
- control means (47) of driving means (51, 52) for the upward and/or downward movement of a scissor mechanism (19) .

13. Tube rail cart (1) according to one or more of the claims 10 to 12, **characterised in that** the switching means (46) are configured to enable or disable the control means (47) for activating and deactivating actuators (48) based on a condition (I-IV, TC-I, TC-II) of the tube rail cart (1) determined by the device (28) and according to one or more of the following criteria:
- upon identifying a first condition (I) or fourth condition (IV), whereby the tube rail cart (1) rests completely on a flat surface (3) or completely on the tube rails (5, 6), enabling or disabling the control means (47) of driving means (51) for the upward movement of a scissor mechanism (19);
- both upon identifying a first condition (I) and a fourth condition (IV), whereby the tube rail cart (1) rests completely on a flat surface (3) or completely on the tube rails (5, 6), enabling the control means (47) of driving means (52) for the downward movement of a scissor mechanism (19); and/or,
- upon identifying a fourth condition (IV), whereby the tube rail cart (1) rests completely on the tube rails (5, 6), or upon identifying another condition of the tube rail cart (1), enabling or disabling the control means (47) of regulating means (49) for limiting the speed of the driving means (53, 54) of the wheels (8, 9) .

14. Tube rail cart according to claim 12 or 13, **characterised in that** the safety system (45) of a tube rail cart (1) ensures one or more of the following safeties:
- not allowing the scissor mechanism (19) to move upward as long as all wheels (8, 9, 11, 12) are not in contact with a tube rail (5, 6); and/or,
- not allowing the wheels (8, 9) to drive the tube rail cart (1) forward or backward as long as all wheels (8, 9, 11, 12) are not in contact with a tube rail (5, 6), or allowing this at a limited speed only).

## Patentansprüche

1. Rohrschienenwagen (1), der dazu bestimmt ist, sich auf einem Paar von Rohrschienen (5, 6) eines Rohrschienensystems (2), beispielsweise eines Gewächshauses, vorwärts bewegen zu können, wobei der Rohrschienenwagen (1) mit einem Paar (7) von Vorderrädern (8, 9) und einem Paar (10) von Hinterrädern (11, 12) versehen ist, wobei sowohl die Vorderräder (8, 9) als auch die Hinterräder (11, 12) des Rohrschienenwagens (1) mit einem axialen Radabschnitt (24, 25) mit kleinem Durchmesser (D₁, D₂) und einem axialen Radabschnitt (26, 27) mit großem Durchmesser (D₃, D₄) versehen sind, **dadurch gekennzeichnet, dass** der Rohrschienenwagen (1) mit einer Einrichtung (28) zur Bestimmung eines Zustandes (I-IV, TC-I, TC-II) des Rohrschienenwagens (1) versehen ist, die zumindest die folgenden Elemente umfasst:
- eine Messeinheit (29) zum Messen der Drehgeschwindigkeit (ω₁) eines der Vorderräder (8, 9) oder eines mit der Drehgeschwindigkeit (ω₁) zusammenhängenden Parameters;
- eine Messeinheit (30) zum Messen der Drehgeschwindigkeit (ω₂) eines der Hinterräder (11, 12) oder eines mit der Drehgeschwindigkeit (ω₂) zusammenhängenden Parameters;
- eine Recheneinheit (31) zur Umrechnung der gemessenen Drehzahlen (ω₁, ω₂) in einen Bestimmungsparameter (P); und,
- eine Bestimmungseinheit (32), die dazu eingerichtet ist, den jeweiligen Zustand (I - IV bzw. TC-I bzw. TC-III) des Rohrschienenwagens (1) anhand des berechneten Bestimmungsparameters (P) zu bestimmen, und die insbesondere dazu eingerichtet ist, zu bestimmen, auf welchem axialen Abschnitt (24 bis 27) der Vorderräder (8, 9) und der Hinterräder (11, 12) sich der Rohrschienenwagen (1) beim Vorwärtsfahren abstützt.

2. Rohrschienenwagen (1) nach Anspruch 1, **dadurch gekennzeichnet, dass** die vorderen Räder (8, 9) identisch und die hinteren Räder (11, 12) identisch ausgeführt sind, wobei der kleine Durchmesser (D₁) und der große Durchmesser (D₃) der jeweiligen Achsabschnitte (24, 26) eines vorderen Rades (8, 9) und der kleine Durchmesser (D₂) und der große Durchmesser (D₄) der jeweiligen Achsabschnitte (25, 27) eines hinteren Rades (11, 12) alle voneinander abweichen.

3. Rohrschienenwagen (1) nach Anspruch 1 oder 2, **dadurch gekennzeichnet, dass** die Bestimmungseinheit (32) ausgebildet ist, um zu bestimmen, in welchem der folgenden Zustände sich der Rohrschienenwagen vorwärts bewegt:
- in einem ersten Zustand (I), bei dem sich der Rohrschienenwagen (1) auf den axialen Abschnitten der Vorderräder (8, 9) mit einem großen Durchmesser und auf den axialen Abschnitten der Hinterräder (11, 12) mit einem großen Durchmesser abstützt;
- in einem zweiten Zustand (II), bei dem sich der Rohrschienenwagen (1) auf den axialen Abschnitten der Vorderräder (8, 9) mit einem großen Durchmesser und auf den axialen Abschnitten der Hinterräder (11, 12) mit einem kleinen Durchmesser abstützt;
- in einem dritten Zustand (III), bei dem sich der Rohrschienenwagen (1) auf den axialen Abschnitten der Vorderräder (8, 9) mit einem kleinen Durchmesser und auf den axialen Abschnitten der Hinterräder (11, 12) mit einem großen Durchmesser abstützt; oder,
- in einem vierten Zustand (IV), bei dem sich der Rohrschienenwagen (1) auf den axialen Abschnitten der Vorderräder (8, 9) mit einem kleinen Durchmesser und auf den axialen Abschnitten der Hinterräder (11, 12) mit einem kleinen Durchmesser abstützt.

4. Rohrschienenwagen (1) nach einem oder mehreren der vorhergehenden Ansprüche, **dadurch gekennzeichnet, dass** die Recheneinheit (31) ausgebildet ist, einen Bestimmungsparameter (P) zu berechnen, der das Verhältnis zwischen der gemessenen Drehzahl (ω₁) an den Vorderrädern (8, 9) und der gemessenen Drehzahl (ω₂) an den Hinterrädern (11, 12) ist (P = ω₁ / ω₂).

5. Rohrschienenwagen (1) nach einem der Ansprüche 2 bis 4, **dadurch gekennzeichnet, dass** die Bestimmungseinheit (32) der Vorrichtung dazu ausgebildet ist, zu überprüfen, welchem der folgenden Verhältnisse zwischen den Durchmessern der Räder (8, 9, 11, 12) der Bestimmungsparameter (P) entspricht:
- das Verhältnis zwischen dem großen Durchmesser (D₄) der hinteren Räder (11, 12) und dem großen Durchmesser (D₃) der vorderen Räder (8, 9), wobei also P = D₄/D₃, gemäß einer vorgenannten ersten Bedingung (I), bei der der Rohrschienenwagen (1) sich mit allen Rädern (8, 9, 11 und 12) auf der ebenen Fläche (3) oder auf dem Betonstreifen (3) vorwärts bewegt;
- das Verhältnis zwischen dem kleinen Durchmesser (D₂) der Hinterräder (11, 12) und dem großen Durchmesser (D₃) der Vorderräder (8, 9), wobei also P = D₂/D₃ ist, gemäß einer vorgenannten zweiten Bedingung (II), bei der der Schienenwagen (1) mit den Vorderrädern (8, 9) auf der ebenen Fläche (3) fährt und sich mit den Hinterrädern (11, 12) auf den Rohrschienen (5, 6) vorwärts bewegt;
- das Verhältnis zwischen dem großen Durchmesser (D₄) der hinteren Räder (11, 12) und dem kleinen Durchmesser (D₁) der vorderen Räder (8, 9), wobei also P = D₄/D₁, gemäß einer vorgenannten dritten Bedingung (III), bei der der Rohrschienenwagen (1) mit den vorderen Rädern (8, 9) auf den Rohrschienen (5, 6) fährt und sich mit den hinteren Rädern (11, 12) auf der ebenen Fläche (3) vorwärts bewegt; oder,
- das Verhältnis zwischen dem kleinen Durchmesser (D₂) der hinteren Räder (11, 12) und dem kleinen Durchmesser (D₁) der vorderen Räder (8, 9), wobei also P = D₂/D₁, gemäß einer oben erwähnten vierten Bedingung (IV), bei der der Rohrschienenwagen (1) sich mit allen Rädern (8, 9, 11 und 12) auf den Rohrschienen (5, 6) vorwärts bewegt.

6. Rohrschienenwagen (1) nach einem oder mehreren der vorhergehenden Ansprüche, **dadurch gekennzeichnet, dass** der Rohrschienenwagen (1) dazu bestimmt ist, mit den axialen Abschnitten (24, 25) mit kleinem Durchmesser (Di, D2) sowohl der vorderen Räder (8, 9) als auch der hinteren Räder (11, 12) auf einem Paar von Rohrschienen (5, 6) und mit den axialen Abschnitten (26, 27) mit großem Durchmesser (D3, D4) sowohl der vorderen Räder (8, 9) als auch der hinteren Räder (11, 12) auf einer ebenen Fläche (3) zu fahren.

7. Rohrschienenwagen (1) nach einem der Ansprüche 3 und 6, **dadurch gekennzeichnet, dass** die Vorrichtung (28) ferner mit einem Speicher (34) versehen ist, wobei die Bestimmungseinheit (32) der Vorrichtung (28) ausgebildet ist, um zu überprüfen, ob eine Änderung des Zustands (C) des Rohrschienenwagens (1) auftritt und ggf. zusätzlich zu überprüfen, ob es sich um einen ersten Übergangszustand (TC-I) von einem ersten Zustand (I) zu einem zweiten Zustand (II) oder dritten Zustand (III) handelt, entsprechend dem Übergang des Rohrschienenwagens (1) vom Fahren auf einer ebenen Fläche (3) zum Fahren auf einem Rohrschienenpaar (5, 6), oder ob es sich um einen Übergangszustand (TC-II) von einem vierten Zustand (IV) zu einem zweiten Zustand (II) oder dritten Zustand (III) handelt, entsprechend dem Übergang des Rohrschienenwagens (1) vom Fahren auf einem Rohrschienenpaar (5, 6) zum Fahren auf einer ebenen Fläche (3).

8. Rohrschienenwagen (1) nach einem oder mehreren der vorhergehenden Ansprüche, **dadurch gekennzeichnet, dass** ein erstes Paar (7) von Rädern (8, 9) des Paares (7) von Vorderrädern (8, 9) und des Paares (10) von Hinterrädern (11, 12) ein angetriebenes Paar von Rädern (13) ist und wobei ein zweites Paar (10) von Rädern (11, 12) des Paares (7) von Vorderrädern (8, 9) und des Paares (10) von Hinterrädern (11, 12) ein nicht angetriebenes Paar von Leerlaufrädern (16) ist.

9. Rohrschienenwagen (1) nach einem der vorhergehenden Ansprüche, **dadurch gekennzeichnet, dass** mindestens eine Messeinheit (29, 30) der Vorrichtung (28) einen induktiven Sensor (39) umfasst, der in der Achse (40) eingebaut ist, um die sich das Rad (11, 12) dreht, dessen Drehzahl (ω₂) zu messen ist, wobei in dem betreffenden Rad (11, 12) ein Element (41, 42) vorgesehen ist, das pro Umdrehung einen oder mehrere Impulse (37) in dem induktiven Sensor (39) erzeugt.

10. Rohrschienenwagen (1) nach einem der vorhergehenden Ansprüche, **dadurch gekennzeichnet, dass** die Einrichtung (28) zur Bestimmung eines Zustands (Cᵢ, TC-I, TC-II) des Rohrschienenwagens (1) Teil eines Sicherheitssystems (45) ist, wobei die Einrichtung (28) mit einem Signalgenerator (36) zur Erzeugung eines Ausgangssignals (37) in Abhängigkeit von dem von der Bestimmungseinheit (32) ermittelten Zustand (Ci) und/oder Übergangszustand (TC-I, TC-II) des Rohrschienenwagens (1) zu erzeugen, wobei das Sicherheitssystem (45) ferner mindestens Schaltmittel (46) umfasst, um die Steuermittel (47) von Stellgliedern (48) oder Regelmitteln (49) von Stellgliedern (48) des Rohrschienenwagens (1) auf der Grundlage des an die Schaltmittel (46) gesendeten Ausgangssignals (37) zu aktivieren oder deaktivieren.

11. Rohrschienenwagen (1) nach Anspruch 10, **dadurch gekennzeichnet, dass** das Ausgangssignal (37) des Signalgenerators (36) ein digitales Ausgangssignal (37) ist, wobei ein Pegel (38) des Ausgangssignals (37) anzeigt, in welchem Zustand (Cᵢ, TC-I, TC-II) sich der Rohrschienenwagen (1) befindet.

12. Rohrschienenwagen (1) nach Anspruch 10 oder 11, **dadurch gekennzeichnet, dass** die Schaltmittel (46) eines oder mehrere der folgenden Steuermittel (47) zum Aktivieren und Deaktivieren von Stellgliedern (48) aktivieren oder deaktivieren können:
- Steuermittel (47) von Antriebsmitteln (53, 54) zum Vorwärts- oder Rückwärtsfahren eines angetriebenen Radpaares (8, 9);
- Steuermittel (47) von Regelungsmitteln (49) zur Regelung der Geschwindigkeit der Antriebsmittel (53, 54) der Räder (8, 9); und/oder,
- Steuermittel (47) von Antriebsmitteln (51, 52) für die Aufwärts- und/oder Abwärtsbewegung eines Scherenmechanismus (19).

13. Rohrschienenwagen (1) nach einem oder mehreren der Ansprüche 10 bis 12, **dadurch gekennzeichnet, dass** die Schaltmittel (46) so konfiguriert sind, dass sie die Steuermittel (47) zum Aktivieren und Deaktivieren von Aktuatoren (48) auf der Grundlage eines von der Vorrichtung (28) ermittelten Zustands (I-IV, TC-I, TC-II) des Rohrschienenwagens (1) und gemäß einem oder mehreren der folgenden Kriterien aktivieren oder deaktivieren:
- beim Erkennen eines ersten Zustands (I) oder eines vierten Zustands (IV), bei dem der Rohrschienenwagen (1) vollständig auf einer ebenen Fläche (3) oder vollständig auf den Rohrschienen (5, 6) aufliegt, die Steuereinrichtung (47) der Antriebseinrichtung (51) für die Aufwärtsbewegung eines Scherenmechanismus (19) aktivieren oder deaktivieren;
- sowohl beim Erkennen eines ersten Zustands (I) als auch eines vierten Zustands (IV), wobei der Rohrschienenwagen (1) vollständig auf einer ebenen Fläche (3) oder vollständig auf den Rohrschienen (5, 6) aufliegt, die Steuerung (47) von Antriebsmitteln (52) für die Abwärtsbewegung eines Scherenmechanismus (19) aktivieren; und/oder,
beim Erkennen eines vierten Zustands (IV), bei dem der Rohrschienenwagen (1) vollständig auf den Rohrschienen (5, 6) aufliegt, oder beim Erkennen eines anderen Zustands des Rohrschienenwagens (1), die Steuereinrichtung (47) der Regelungseinrichtung (49) zur Begrenzung der Geschwindigkeit der Antriebseinrichtung (53, 54) der Räder (8, 9) aktivieren oder deaktivieren.

14. Rohrschienenwagen nach Anspruch 12 oder 13, **dadurch gekennzeichnet, dass** das Sicherheitssystem (45) eines Rohrschienenwagens (1) eine oder mehrere der folgenden Sicherheiten gewährleistet:
- dass der Scherenmechanismus (19) sich nicht nach oben bewegen kann, solange nicht alle Räder (8, 9, 11, 12) in Kontakt mit einer Rohrschiene (5, 6) sind; und/oder,
- die Räder (8, 9) den Rohrschienenwagen (1) nicht vorwärts oder rückwärts fahren lassen, solange nicht alle Räder (8, 9, 11, 12) mit einer Rohrschiene (5, 6) in Kontakt sind, oder dies nur mit einer begrenzten Geschwindigkeit zu lassen.

## Revendications

1. Chariot sur rails tubulaires (1) qui est destiné à pouvoir se déplacer vers l'avant sur une paire de rails tubulaires (5, 6) d'un système de rails tubulaires (2), par exemple d'une serre, dans lequel le chariot sur rails tubulaires (1) est équipé d'une paire (7) de roues avant (8, 9) et d'une paire (10) de roues arrière (11, 12), dans lequel à la fois les roues avant (8, 9) et les roues arrière (11, 12) du chariot sur rails tubulaires (1) sont munies d'un tronçon de roue axial (24, 25) qui comprend un petit diamètre (D₁, D₂) et d'un tronçon de roue axial (26, 27) qui comprend un grand diamètre (D₃, D₄), **caractérisé en ce que** le chariot sur rails tubulaires (1) est équipé d'un dispositif (28) destiné à déterminer une condition (I - IV, TC-I, TC-II) du chariot sur rails tubulaires (1), qui comprend au moins les éléments suivants :
- une unité de mesure (29) destinée à mesurer la vitesse de rotation (ω₁) d'une des roues avant (8, 9) ou un paramètre lié à ladite vitesse de rotation (ω₁) ;
- une unité de mesure (30) destinée à mesurer la vitesse de rotation (ω₂) d'une des roues arrière (11, 12) ou un paramètre lié à ladite vitesse de rotation (ω₂) ;
- une unité de calcul (31) destinée à convertir les vitesses de rotation mesurées (ω₁, ω₂) en un paramètre détermination (P) ; et
- une unité de détermination (32) qui est configurée pour déterminer la condition pertinente (I - IV ou TC-I ou TC-II) du chariot sur rails tubulaires (1) en se basant sur le paramètre de détermination calculé (P) et qui, de manière plus spécifique, est configurée pour déterminer le tronçon axial (24 à 27) des roues avant (8, 9) et des roues arrière (11, 12) qui supporte le chariot sur rails tubulaires (1) lorsque ce dernier se déplace vers l'avant.

2. Chariot sur rails tubulaires (1) selon la revendication 1, **caractérisé en ce que** les roues avant (8, 9) sont réalisées de manière identique et les roues arrière (11, 12) sont réalisées de manière identique, dans lequel le petit diamètre (D₁) et le grand diamètre (D₃) des tronçons axiaux pertinents (24, 26) d'une roue avant (8, 9) et le petit diamètre (D₂) et le grand diamètre (D₄) des tronçons axiaux pertinents (25, 27) d'une roue arrière (11, 12) diffèrent tous les uns des autres.

3. Chariot sur rails tubulaires (1) selon la revendication 1 ou 2, **caractérisé en ce que** l'unité de détermination (32) est configurée pour déterminer la condition dans laquelle, parmi les conditions suivantes, le chariot sur rails tubulaires est en train de se déplacer vers l'avant :
- une première condition (I) dans laquelle le chariot sur rails tubulaires (1) est supporté par les tronçons axiaux des roues avant (8, 9) qui comprennent un grand diamètre et par les tronçons axiaux des roues arrière (11, 12) qui comprennent un grand diamètre ;
- une deuxième condition (II) dans laquelle le chariot sur rails tubulaires (1) est supporté par les tronçons axiaux des roues avant (8, 9) qui comprennent un grand diamètre et par les tronçons axiaux des roues arrière (11, 12) qui comprennent un petit diamètre ;
- une troisième condition (III) dans laquelle le chariot sur rails tubulaires (1) est supporté par les tronçons axiaux des roues avant (8, 9) qui comprennent un petit diamètre et par les tronçons axiaux des roues arrière (11, 12) qui comprennent un grand diamètre ; ou
- une quatrième condition (IV) dans laquelle le chariot sur rails tubulaires (1) est supporté par les tronçons axiaux des roues avant (8, 9) qui comprennent un petit diamètre et par les tronçons axiaux des roues arrière (11, 12) qui comprennent un petit diamètre.

4. Chariot sur rails tubulaires (1) selon une ou plusieurs des revendications précédentes, **caractérisé en ce que** l'unité de calcul (31) est configurée pour calculer un paramètre de détermination (P) qui représente un rapport entre la vitesse de rotation mesurée (ω₁) aux roues avant (8, 9) et la vitesse de rotation mesurée (ω₂) aux roues arrière (11, 12) (P = ω₁ / ω₂).

5. Chariot sur rails tubulaires (1) selon les revendications 2 à 4, **caractérisé en ce que** l'unité de détermination (32) du dispositif est configurée pour vérifier à quel rapport, parmi les rapports suivants entre les diamètres des roues (8, 9, 11, 12), le paramètre de détermination correspond :
- le rapport entre le grand diamètre (D₄) des roues arrière (11, 12) et le grand diamètre (D₃) des roues avant (8, 9), dans lequel, par conséquent P = D₄/D₃, en conformité avec une première condition (I) qui a été mentionnée ci-dessus, dans laquelle le chariot sur rails tubulaires (1) se déplace vers l'avant avec toutes les roues (8, 9, 11 et 12) sur la surface plane (3) ou sur la bande en béton (3) ;
- le rapport entre le petit diamètre (D₂) des roues arrière (11, 12) et le grand diamètre (D₃) des roues avant (8, 9), dans lequel, par conséquent P = D₂/D₃, en conformité avec une deuxième condition (II) qui a été mentionnée ci-dessus, dans laquelle le chariot sur rails tubulaires (1) se déplace avec les roues avant (8, 9) sur la surface plane (3) et se déplace vers l'avant avec les roues arrière (11, 12) sur les rails tubulaires (5, 6) ;
- le rapport entre le grand diamètre (D₄) des roues arrière (11, 12) et le petit diamètre (D₁) des roues avant (8, 9), dans lequel, par conséquent P = D₄/D₁, en conformité avec une troisième condition (III) qui a été mentionnée ci-dessus, dans laquelle le chariot sur rails tubulaires (1) se déplace avec les roues avant (8, 9) sur les rails tubulaires (5, 6) et se déplace vers l'avant avec les roues arrière (11, 12) sur la surface plane (3) ; ou
- le rapport entre le petit diamètre (D₂) des roues arrière (11, 12) et le petit diamètre (D₁) des roues avant (8, 9), dans lequel, par conséquent P = D₂/D₁, en conformité avec une quatrième condition (IV) qui a été mentionnée ci-dessus, dans laquelle le chariot sur rails tubulaires (1) se déplace vers l'avant avec toutes les roues (8, 9, 11 et 12) sur les rails tubulaires (5, 6).

6. Chariot sur rails tubulaires (1) selon une ou plusieurs des revendications précédentes, **caractérisé en ce que** le chariot sur rails tubulaires (1) est destiné à se déplacer avec les tronçons axiaux (24, 25) qui comprennent un petit diamètre (D₁, D₂) à la fois des roues avant (8, 9) et des roues arrière (11, 12) sur une paire de rails tubulaires (5, 6) et avec les tronçons axiaux (26, 27) qui comprennent un grand diamètre (D₃, D₄) à la fois des roues avant (8, 9) et des roues arrière (11, 12) sur une surface plane (3).

7. Chariot sur rails tubulaires (1) selon les revendications 3 et 6, **caractérisé en ce que** le dispositif (28) est également équipé d'une mémoire (34), dans lequel l'unité de détermination (32) du dispositif (28) est configurée pour vérifier le fait de savoir s'il existe ou non une modification en ce qui concerne la condition (C) du chariot sur rails tubulaires (1) et, si nécessaire, vérifie en outre le fait de savoir s'il s'agit d'une modification vers une première condition transitoire (TC-I) à partir d'une première condition (I) jusqu'à une deuxième condition (II) ou une troisième condition (III), en conformité avec la transition du déplacement du chariot sur rails tubulaires (1) sur une surface plane (3) à un déplacement sur une paire de rails tubulaires (5, 6) ou le fait de savoir s'il s'agit d'une modification vers une condition transitoire (TC-II) à partir d'une quatrième condition (IV) jusqu'à une deuxième condition (II) ou une troisième condition (III), en conformité avec le passage du déplacement du chariot sur rails tubulaires (1) sur une paire de rails tubulaires (5, 6) à un déplacement sur une surface plane (3).

8. Chariot sur rails tubulaires (1) selon une ou plusieurs des revendications précédentes, **caractérisé en ce qu'**une première paire (7) de roues (8, 9) de la paire (7) de roues avant (8, 9) et de la paire (10) de roues arrière (11, 12) représente une paire entraînée de roues (13) et dans lequel une deuxième paire (10) de roues (11, 12) de la paire (7) de roues avant (8, 9) et de la paire (10) de roues arrière (11, 12) représente une paire non entraînée de roues libres (16).

9. Chariot sur rails tubulaires (1) selon l'une quelconque des revendications précédentes, **caractérisé en ce qu'**au moins une unité de mesure (29, 30) du dispositif (28) comprend un capteur inductif (39) qui est incorporé dans l'essieu (40) autour duquel tourne la roue (11, 12) dont la vitesse de rotation (ω₂) doit être mesurée, dans lequel un élément (41, 42) est prévu dans la roue pertinente (11, 12), qui génère une ou plusieurs impulsions (37) par rotation dans le capteur inductif (39).

10. Chariot sur rails tubulaires (1) selon l'une quelconque des revendications précédentes, **caractérisé en ce que** le dispositif (28) destiné à déterminer une condition (Cᵢ, TC-I, TC-II) du chariot sur rails tubulaires (1) fait partie d'un système de sécurité (45), dans lequel le dispositif (28) est équipé d'un générateur de signaux (36) destiné à générer un signal de sortie (37) qui dépend de la condition (Cᵢ) et/ou de la condition transitoire (TC-I, TC-II) du chariot sur rails tubulaires (1), qui a été identifiée par une unité de détermination (32), dans lequel le système de sécurité (45) comprend en outre au moins un moyen de commutation (46) qui active au désactive des moyens de commande (47) destinés à activer et/ou désactiver des actionneurs (48) ou des moyens de régulation (49) d'actionneurs (48) du chariot sur rails tubulaires (1) en se basant sur le signal de sortie (37) qui a été envoyé aux moyens de commutation (46).

11. Chariot sur rails tubulaires (1) selon la revendication 10, **caractérisé en ce que** le signal de sortie (37) du générateur de signaux (36) est un signal de sortie numérique (37), dans lequel un niveau (38) du signal de sortie (37) indique la condition (Cᵢ, TC-I, TC-II) dans laquelle se trouve le chariot sur rails tubulaires (1).

12. Chariot sur rails tubulaires (1) selon la revendication 10 ou 11, **caractérisé en ce que** les moyens de commutation (46) sont capables d'activer ou de désactiver un ou plusieurs des moyens de commande (47) indiqués ci-après pour activer et désactiver des actionneurs (48) :
- des moyens de commande (47) de moyens d'entraînement (53, 54) destinés à entraîner une paire entraînée de roues (8, 9) vers l'avant ou vers l'arrière ;
- des moyens de commande (37) de moyens de régulation (49) destinés à régler la vitesse des moyens d'entraînement (53, 54) des roues (8, 9) ; et/ou
- des moyens de commande (47) de moyens d'entraînement (51, 52) pour le mouvement vers le haut et/ou vers le bas d'un mécanisme (19) faisant office de ciseaux.

13. Chariot sur rails tubulaires (1) selon une ou plusieurs des revendications 10 à 12, **caractérisé en ce que** les moyens de commutation (46) sont configurés pour activer ou désactiver les moyens de commande (47) destinés à activer et à désactiver des actionneurs (48) en se basant sur une condition (I - IV, TC-I, TC-II) du chariot sur rails tubulaires (1) déterminée par le dispositif (28) et en fonction d'un ou de plusieurs des critères indiqués ci-après :
- après identification d'une première condition (I) ou d'une quatrième condition (IV) dans laquelle le chariot sur rails tubulaires (1) repose complètement sur une surface plane (3) ou complètement sur les rails tubulaires (5, 6), activer ou désactiver les moyens de commande (47) des moyens d'entraînement (51) pour le mouvement vers le haut d'un mécanisme (19) faisant office de ciseaux ;
- à la fois après identification d'une première condition (I) et d'une quatrième condition (IV) dans lesquelles le chariot sur rails tubulaires (1) repose complètement sur une surface plane (3) ou complètement sur les rails tubulaires (5, 6), activer les moyens de commande (47) des moyens d'entraînement (52) pour le mouvement vers le bas d'un mécanisme (19) faisant office de ciseaux ; et/ou
- après identification d'une quatrième condition (IV) dans laquelle le chariot sur rails tubulaires (1) repose complètement sur les rails tubulaires (5, 6), ou après identification d'une autre condition du chariot sur rails tubulaires (1), activer ou désactiver les moyens de commande (47) de moyens de régulation (49) afin de limiter la vitesse des moyens d'entraînement (53, 54) des roues (8, 9).

14. Chariot sur rails tubulaires selon la revendication 12 ou 13, **caractérisé en ce que** le système de sécurité (45) d'un chariot sur rails tubulaires (1) garantit une ou plusieurs des sécurités indiquées ci-après :
- ne pas permettre au mécanisme (19) faisant office de ciseaux de se déplacer vers le haut tant que toutes les roues (8, 9, 11, 12) ne sont pas mises en contact avec un rail tubulaire (5, 6) ; et/ou
- ne pas permettre aux roues (8, 9) d'entraîner le chariot sur rails tubulaires (1) vers l'avant ou vers l'arrière tant que toutes les roues (8, 9, 11, 12) ne sont pas mises en contact avec un rail tubulaire (5, 6) ou permettre ledit entraînement à une vitesse limitée uniquement.
